# EUROPEAN PATENT APPLICATION

(11) **EP 4 624 515 A1**
(43) Date of publication of application: **01.10.2025**
(21) Application number: 23894547.1
(22) Date of filing: 20.11.2023
(51) Int. Cl.: C08G 64/40, C08G 64/26

(54) **METHOD FOR PRODUCING REFINED POLYCARBONATE RESIN**

(30) Priority: 25.11.2022 JP 2022188272
(71) Applicant: MITSUBISHI GAS CHEMICAL COMPANY, INC., Chiyoda-ku Tokyo 100-8324 (JP)
(72) Inventor: FUJII, Takashi, Tokyo 100-8324 (JP); SHIMIZU, Hidetaka, Tokyo 100-8324 (JP); ITO, Maki, Tokyo 100-8324 (JP)
(74) Representative: Hoffmann Eitle
(86) International application number: PCT/JP2023/041604
(87) International publication number: WO 2024/111539

(57) **Abstract**

The present invention is capable of providing a method for producing a refined polycarbonate resin by removing unreacted dihydroxy compounds contained as impurities in a polycarbonate resin following polymerization. This production method includes: (i) a step for dissolving said polycarbonate resin following polymerization in an organic solvent, and filtering to prepare a 1-30 mass% resin solution or (ii) a step for preparing, by means of interfacial polymerization, a 1-30 mass% resin solution in which a polycarbonate resin is dissolved in an organic solvent following interfacial polymerization; and a step for passing the obtained resin solution through a column chromatograph to remove unreacted dihydroxy compounds contained as impurities in the polycarbonate resin following polymerization.

## Description

### TECHNICAL FIELD

The present invention relates to a method for producing a refined polycarbonate resin, wherein dihydroxy compounds as impurities are efficiently removed by a simple method.

### BACKGROUND ART

Polycarbonate resins are used for various applications because of excellent properties thereof. In polycarbonate resins, small amounts of dihydroxy compounds (e.g., bisphenols) that are raw materials are contained as impurities. There is a need for a method for efficiently removing such dihydroxy compounds as impurities by means of a simple method.

For example, as a method for providing a polycarbonate resin in which the amount of impurities is small, Patent Document 1 proposes a method for subjecting a pellet-type polycarbonate resin to extraction treatment with 2-ethoxyethyl acetate, but it is difficult to remove impurities existing in pellets.

Patent Document 2 proposes a method for melting and devolatilizing a polycarbonate resin containing volatile impurities to reduce the content of the volatile impurities, but although this may be effective in removing volatile impurities such as phenol, it is difficult to remove high boiling point compounds such as bisphenol.

Under such circumstances, a method that is capable of industrially removing dihydroxy compounds as impurities efficiently with low energy consumption without deterioration of a polycarbonate resin has been desired.

### PRIOR ART DOCUMENTS

### PATENT DOCUMENTS

Patent Document 1: WO02/031024
Patent Document 2: Japanese Laid-Open Patent Publication No. 2009-52027

### SUMMARY OF THE INVENTION

### PROBLEMS TO BE SOLVED BY THE INVENTION

The present invention addresses the problem of solving at least one of the above-described conventional problems. The present invention further addresses the problem of obtaining a refined polycarbonate resin by industrially removing dihydroxy compounds as impurities efficiently with low energy consumption without deterioration of the polycarbonate resin.

### MEANS FOR SOLVING THE PROBLEMS

The present inventors diligently made researches in order to solve the conventional problems and found that, by passing a specific resin solution through a column chromatograph, dihydroxy compounds as impurities can be industrially removed efficiently with low energy consumption without deterioration of a polycarbonate resin, thereby obtaining a refined polycarbonate resin, and thus the present invention was achieved.

Specifically, the present invention includes aspects described below.
<1> A method for producing a refined polycarbonate resin by removing unreacted dihydroxy compounds contained (accompanying) as impurities in a polycarbonate resin after polymerization, the method including:
   (i) a step of dissolving the polycarbonate resin after polymerization in an organic solvent and performing filtration to prepare a 1 to 30% by mass resin solution, or (ii) a step of preparing, by means of an interfacial polymerization method, a 1 to 30% by mass resin solution in which a polycarbonate resin after interfacial polymerization is dissolved in an organic solvent; and
      a step of passing the obtained resin solution through a column chromatograph to remove unreacted dihydroxy compounds contained (accompanying) as impurities in the polycarbonate resin after polymerization.
<2> The method according to item <1>, wherein the column chromatograph is a simulated moving bed chromatograph.
<3> The method according to item <1> or <2>, wherein the organic solvent is methylene chloride.
<4> The method according to any one of items <1> to <3>, wherein the amount of the dihydroxy compounds contained (accompanying) in the refined polycarbonate resin is 50 ppm or less.
<5> The method according to any one of items <1> to <4>, wherein the polycarbonate resin is a bisphenol A-type polycarbonate resin and the dihydroxy compounds are bisphenol A.
<6> A molded body comprising a refined polycarbonate resin obtained by the method according to any one of items <1> to <5>.

### ADVANTAGEOUS EFFECT OF THE INVENTION

According to the present invention, it is possible to obtain a refined polycarbonate resin by industrially removing dihydroxy compounds as impurities efficiently with low energy consumption without deterioration of the polycarbonate resin.

### EMBODIMENTS FOR CARRYING OUT THE INVENTION

Hereinafter, the present invention will be described in detail by way of working examples, etc., but the present invention is not limited thereto and can be arbitrarily changed and then practiced within a range not departing from the gist of the present invention.

One embodiment of the present invention is a method for producing a refined polycarbonate resin by removing unreacted dihydroxy compounds contained (accompanying) as impurities in a polycarbonate resin after polymerization, the method including: (i) a step of dissolving the polycarbonate resin after polymerization in an organic solvent and performing filtration to prepare a 1 to 30% by mass resin solution, or (ii) a step of preparing, by means of an interfacial polymerization method, a 1 to 30% by mass resin solution in which a polycarbonate resin after interfacial polymerization is dissolved in an organic solvent; and a step of passing the obtained resin solution through a column chromatograph to remove unreacted dihydroxy compounds contained (accompanying) as impurities in the polycarbonate resin after polymerization.

In the present invention, examples of the organic solvent for dissolving the polycarbonate resin after polymerization in the step (i) and the organic solvent for dissolving the polycarbonate resin after interfacial polymerization in the step (ii) include methylene chloride, tetrahydrofuran, methyl ethyl ketone, acetone, methanol, ethanol, and toluene, and it is preferred that methylene chloride is included. These organic solvents may be used solely, or two or more of them may be used in combination.

In the present invention, in the step (i), filtration is performed for the purpose of, for example, removing components that do not dissolve in the organic solvent, and filtration is preferably performed using a paper filter, a membrane filter (screen filter), a metal filter that is a filter made of a metal in which a metal nonwoven fabric or wire mesh is used as a filter material, any of polymer filters (leaf disk type, pleated type, candle type, pack disk type, cylindrical type, etc.), or the like, and filtration is more preferably performed using a leaf disk type polymer filter that has a large effective filtration area. The mesh of the polymer filter is preferably 500 µm or less, more preferably 100 µm or less, and particularly preferably 30 µm or less.

In the present invention, the concentration of the resin solution obtained after filtration in the step (i) and the resin solution obtained in the step (ii) is 1 to 30% by mass, preferably 5 to 20% by mass, and more preferably 10 to 20% by mass.

When the concentration of the resin solution is less than 1% by mass, the productivity of the polycarbonate resin is deteriorated, and when the concentration is more than 30% by mass, the viscosity of the resin solution increases rapidly, and problems such as an increase in the internal pressure of a column chromatograph and resin precipitation tend to occur. Further, the separation ability is deteriorated.

When only the filtration process is considered, a resin solution having a lower concentration is advantageous because it is easier to perform filtration, while a resin solution having a higher concentration is disadvantageous because it is more difficult to perform filtration. The optimum concentration can be determined by balancing with productivity and decrease of the amount of a solvent used as much as possible.

In the present invention, the obtained resin solution is passed through a column chromatograph to remove unreacted dihydroxy compounds contained (accompanying) as impurities in the polycarbonate resin after polymerization. As the column chromatograph, a fixed bed chromatograph, a moving bed chromatograph, a multicomponent separation and circulation type chromatograph, a simulated moving bed chromatograph (also known as a reverse phase chromatograph) or the like can be used, and a simulated moving bed chromatograph is preferably used from the viewpoint of good separation ability, the possibility of increasing in size, and the system in which a solvent is easily recovered and recycled.

The simulated moving bed chromatograph preferably used in the present invention is not particularly limited, but it is preferred to use the simulated moving bed chromatograph described in Japanese Laid-Open Patent Publication No. H11-228455.

The amount of the dihydroxy compounds contained (accompanying) in the refined polycarbonate resin is preferably 50 ppm or less, more preferably 20 ppm or less, and particularly preferably 10 ppm or less.

In the present invention, as the method for measuring the concentration (ppm) of the dihydroxy compounds in the resin, the method described in the Examples below can be employed.

According to the present invention, any type of polycarbonate resin can be refined, but the polycarbonate resin to be refined is preferably a bisphenol A-type polycarbonate resin, since it has a relatively stable structure, it is technically easily refined, it is a type that is excreted in large quantities in the world, and refinement thereof is very important. In this case, the dihydroxy compounds to be removed are bisphenol A.

The refined polycarbonate resin thus obtained is preferably used for the production of molded bodies.

Further, the present invention can also be applied to a polycarbonate resin obtained from a diol represented by general formula (2-1) or (2-2) below. 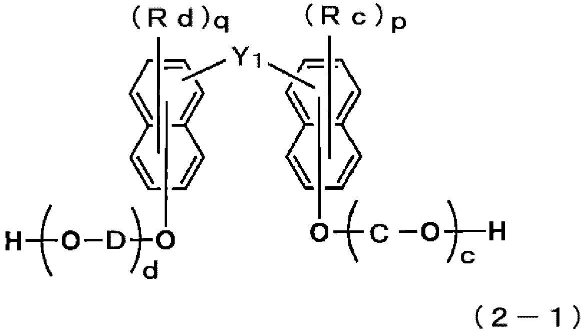 (In general formula (2-1):
R_{c} and R_{d} are each independently selected from the group consisting of a hydrogen atom; a halogen atom; a substituted or unsubstituted alkyl group having 1 to 20 carbon atoms; a substituted or unsubstituted alkoxyl group having 1 to 20 carbon atoms; a substituted or unsubstituted cycloalkyl group having 5 to 20 carbon atoms; a substituted or unsubstituted cycloalkoxyl group having 5 to 20 carbon atoms; a substituted or unsubstituted aryl group having 6 to 20 carbon atoms; a substituted or unsubstituted heteroaryl group having 6 to 20 carbon atoms which contains at least one heterocyclic atom selected from O, N and S; a substituted or unsubstituted aryloxy group having 6 to 20 carbon atoms; and -C≡C-Rₕ₃;
Rₕ₃ represents a substituted or unsubstituted aryl group having 6 to 20 carbon atoms, or a substituted or unsubstituted heteroaryl group having 6 to 20 carbon atoms which contains at least one heterocyclic atom selected from O, N and S;
Y₁ represents a single bond or a substituted or unsubstituted fluorene group;
C and D each independently represent a substituted or unsubstituted alkylene group having 1 to 5 carbon atoms;
p and q each independently represent an integer of 0 to 6; and
c and d each independently represent an integer of 0 to 10.) 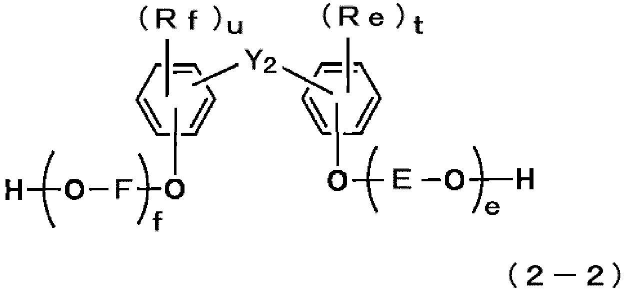
(In general formula (2-2):
Rₑ and R_{f} are each independently selected from the group consisting of a hydrogen atom, a halogen atom, a substituted or unsubstituted alkyl group having 1 to 20 carbon atoms, a substituted or unsubstituted alkoxyl group having 1 to 20 carbon atoms, a substituted or unsubstituted cycloalkyl group having 5 to 20 carbon atoms, a substituted or unsubstituted cycloalkoxyl group having 5 to 20 carbon atoms, and a substituted or unsubstituted aryl group having 6 to 20 carbon atoms;
Y₂ represents a single bond, a substituted or unsubstituted fluorene group, or any one of structural formulae represented by formulae (8) to (15): 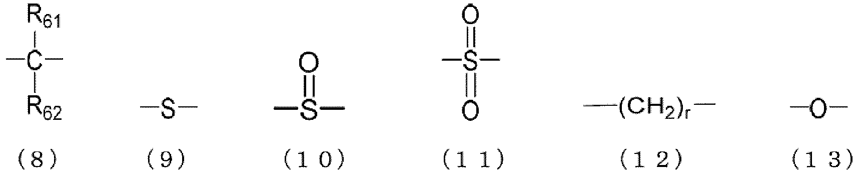 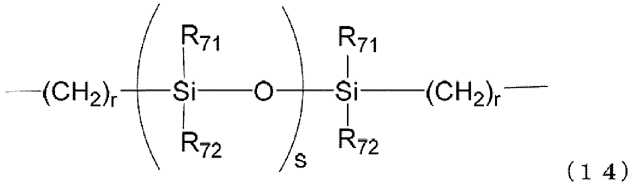 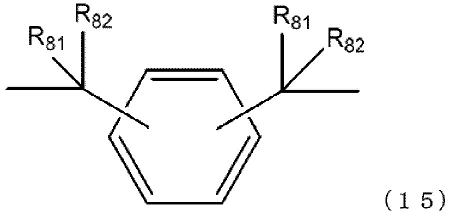
(wherein in formulae (8) to (15):
   R₆₁, R₆₂, R₇₁, R₇₂, R₈₁ and R₈₂ each independently represent a hydrogen atom, a halogen atom, a substituted or unsubstituted alkyl group having 1 to 20 carbon atoms, or a substituted or unsubstituted aryl group having 6 to 30 carbon atoms, or represent a substituted or unsubstituted carbocyclic ring or heterocyclic ring having 1 to 20 carbon atoms, wherein R₆₁ and R₆₂, or R₇₁ and R₇₂, are bonded to each other, and
   r and s each independently represent an integer of 0 to 5000);
   E and F each independently represent a substituted or unsubstituted alkylene group having 1 to 5 carbon atoms;
   t and u each independently represent an integer of 0 to 4; and
   e and f each independently represent an integer of 0 to 10.)

### EXAMPLES

Hereinafter, the present invention will be described in detail by way of working examples, but the present invention is not limited thereto.

### <Concentration (ppm) of Dihydroxy Compounds in Resin>

1.2 g of a resin was dissolved in 7 ml of methylene chloride, and the obtained solution was added to 23 ml of acetone while stirring. A solid precipitated, and a supernatant liquid was quantified by liquid chromatography. Analysis conditions for liquid chromatography are as described below.
Apparatus: Alliance HPLC e2695 (manufactured by Waters)
Column: KF-801 (manufactured by Shodex) + KF-801 (manufactured by Shodex)
Detector: UV detector 2489 (manufactured by Waters)
Eluent: chloroform
Detection limit: 0.5 ppm

### (Example 1)

A polycarbonate resin containing 90 ppm of bisphenol A was dissolved in methylene chloride, and the mixture was filtered using a 20-µm mesh leaf disk type polymer filter to prepare a 15% by mass polycarbonate resin solution. The obtained resin solution was passed through a simulated moving bed chromatograph. A cycle, in which flow channel switching was performed intermittently eight times by controlling opening and closing of an electromagnetic valve using a sequencer, was performed to carry out fractionation repeatedly.

Details of the simulated moving bed chromatograph are as described below.

Apparatus: It was based on the simulated moving bed chromatograph described in Japanese Laid-Open Patent Publication No. H11-228455.
Column: stainless steel column (with heating jacket)
   inner diameter: 0.9 cm, length: 40 cm, 8 columns, connected in series, filled with porous gel
Temperature: 60°C
Time for one cycle: 205 minutes
Supply flow rate: total 7.4 ml/min
   Supply flow rate of resin solution: 0.7 ml/min
   Supply flow rate of eluent: methylene chloride, 6.7 ml/min
Discharge flow rate: total 7.4 ml/min
   Weakly adsorbent fractionated component: 2.8 ml/min
   Strongly adsorbent fractionated component: 4.6 ml/min

Methylene chloride was evaporated from the solution collected from the weakly adsorbent fractionated component 300 to 350 minutes after the start of the fractionation operation to obtain a refined polycarbonate resin. Based on the above-described measurement method, the concentration of bisphenol A in the obtained refined polycarbonate resin was measured, and it was 10 ppm.

### (Example 2)

As a resin solution, a solution obtained by dissolving a polycarbonate resin in methylene chloride by means of an interfacial polymerization method (15% by mass polycarbonate resin solution) was used. After methylene chloride was removed from the solution, 3 ppm of bisphenol A was contained in the obtained polycarbonate resin.

The solution was passed through a simulated moving bed chromatograph. A cycle, in which flow channel switching was performed intermittently eight times by controlling opening and closing of an electromagnetic valve using a sequencer, was performed to carry out fractionation repeatedly.

Details of the simulated moving bed chromatograph are as described below.
Simulated moving bed chromatograph: Simulated moving bed-type chromatograph manufactured by Organo Corporation
Column: stainless steel column (with heating jacket)
   inner diameter: 0.9 cm, length: 40 cm, 8 columns, connected in series, filled with porous gel
Temperature: 55°C
Time for one cycle: 220 minutes
Supply flow rate: total 7.6 ml/min
   Supply flow rate of resin solution: 0.8 ml/min
   Supply flow rate of eluent: methylene chloride, 6.8 ml/min
Discharge flow rate: total 7.6 ml/min
   Weakly adsorbent fractionated component: 2.9 ml/min
   Strongly adsorbent fractionated component: 4.7 ml/min

Methylene chloride was evaporated from the solution collected from the weakly adsorbent fractionated component 300 to 350 minutes after the start of the fractionation operation to obtain a refined polycarbonate resin. Based on the above-described measurement method, the concentration of bisphenol A in the obtained refined polycarbonate resin was measured, and it was 0.3 ppm.

## Claims

1. A method for producing a refined polycarbonate resin by removing unreacted dihydroxy compounds contained as impurities in a polycarbonate resin after polymerization, the method comprising:
(i) dissolving the polycarbonate resin after polymerization in an organic solvent and performing filtration to prepare a 1 to 30% by mass resin solution, or (ii) preparing, by means of an interfacial polymerization method, a 1 to 30% by mass resin solution in which a polycarbonate resin after interfacial polymerization is dissolved in an organic solvent; and
passing the obtained resin solution through a column chromatograph to remove unreacted dihydroxy compounds contained as impurities in the polycarbonate resin after polymerization.

2. The method according to claim 1, wherein the column chromatograph is a simulated moving bed chromatograph.

3. The method according to claim 1 or 2, wherein the organic solvent is methylene chloride.

4. The method according to any one of claims 1 to 3, wherein an amount of the dihydroxy compounds contained in the refined polycarbonate resin is 50 ppm or less.

5. The method according to any one of claims 1 to 4, wherein the polycarbonate resin is a bisphenol A-type polycarbonate resin and the dihydroxy compounds are bisphenol A.

6. A molded body comprising a refined polycarbonate resin obtained by the method according to any one of claims 1 to 5.
